# EUROPÄISCHE PATENTANMELDUNG

(11) **EP 4 776 144 A1**
(43) Veröffentlichungstag der Anmeldung: **15.07.2026**
(21) Anmeldenummer: 26150926.9
(22) Anmeldetag: 09.01.2026
(51) Int. Cl.: G06F 13/38, G06F 13/40, G06F 13/42, G06K 7/10, H04L 67/00, G06F 3/02, H04L 12/28, H04L 12/40, G06K 17/00, H04N 23/60

(54) **DATENERFASSUNGSSYSTEM**

(30) Priorität: 10.01.2025 DE 102025100748
(71) Anmelder: SICK AG, 79183 Waldkirch (DE)
(72) Erfinder: MAHLER, Jan, 79292 Pfaffenweiler (DE)
(74) Vertreter: Manitz Finsterwald Patent- und Rechtsanwaltspartnerschaft mbB

(57) **Zusammenfassung**

Ein Datenerfassungssystem umfasst zumindest eine Sensoreinrichtung umfassend eine Erfassungseinheit, zumindest eine Sensorkommunikationsschnittstelle und eine Sensorsteuereinheit, wobei die Sensoreinrichtung dazu eingerichtet ist, erste Objektdaten mit der Erfassungseinheit zu erfassen, und zumindest eine USB-HID-Adaptereinrichtung, die dazu eingerichtet ist, eine Kommunikationsverbindung zwischen der Sensoreinrichtung und einer externen Steuereinrichtung bereitzustellen, wobei die USB-HID-Adaptereinrichtung eine erste Adapterkommunikationsschnittstelle, eine zweite Adapterkommunikationsschnittstelle und eine Adaptersteuereinheit umfasst, wobei die Sensorsteuereinheit dazu eingerichtet ist, Konfigurationsinformationen zu erhalten, einen Steuerbefehl basierend auf den Konfigurationsinformationen zu erzeugen und die ersten Objektdaten und den Steuerbefehl über die zumindest eine Sensorkommunikationsschnittstelle an die USB-HID-Adaptereinrichtung zu übertragen, und wobei die Adaptersteuereinheit dazu eingerichtet ist, die ersten Objektdaten und den Steuerbefehl über die erste Adapterkommunikationsschnittstelle zu erhalten, die ersten Objektdaten basierend auf dem Steuerbefehl in sich von den ersten Objektdaten unterscheidende zweite Objektdaten umzuwandeln, und zumindest die zweiten Objektdaten an die externe Steuereinrichtung über die zweite Adapterkommunikationsschnittstelle zu übertragen.

## Beschreibung

Die Erfindung betrifft ein Datenerfassungssystem, eine USB-HID-Adaptereinrichtung für ein Datenerfassungssystem, eine Sensoreinrichtung für ein Datenerfassungssystem und ein Verfahren zum Erfassen von Objektdaten mit einem Datenerfassungssystem.

Herkömmliche Datenerfassungssysteme kommen beispielsweise in industriellen Umgebungen wie Fertigungsanlagen oder logistischen Verteilzentren zum Einsatz und dienen in der Regel dazu, Informationen von Objekten oder Erzeugnissen zu erfassen und diese an eine übergeordnete Steuer- oder Verarbeitungsvorrichtung zu übertragen. Die erfassten Informationen oder Daten werden zum Beispiel dazu verwendet, um Objekte zu charakterisieren und/oder zu klassifizieren.

Solche Datenerfassungssysteme weisen in der Regel einen Sensor zum Erfassen der Objektdaten auf, welcher zum Austausch von Daten mit der kundenseitigen Verarbeitungsvorrichtung verbunden ist. Fortschrittliche Sensoren, insbesondere deren Anschlusstyp oder deren Art der Datenübertragung, sind jedoch in vielen Fällen nicht mit der Kundenanwendung kompatibel.

Es ist eine Aufgabe der Erfindung, ein vielseitigeres Datenerfassungssystem bereitzustellen.

Die vorgenannte Aufgabe wird durch ein Datenerfassungssystem gemäß Anspruch 1 gelöst.

Das Datenerfassungssystem umfasst zumindest eine Sensoreinrichtung und zumindest eine Universal Serial Bus-Human Interface Device (USB-HID)-Adaptereinrichtung. Insbesondere umfasst das Datenerfassungssystem genau eine Sensoreinrichtung und/oder genau eine USB-HID-Adaptereinrichtung. Je nach Anwendungsfall kann das Datenerfassungssystem aber auch zwei oder mehr Sensoreinrichtungen und/oder zwei oder mehr USB-HID-Adaptereinrichtungen umfassen.

Die USB Human Interface Device Class (USB HID Class) ist ein Teil der USB-Spezifikation für Computer-Peripheriegeräte. Sie spezifiziert eine Geräteklasse (d.h. eine Art von Computer-Hardware) für Human Interface Devices wie zum Beispiel Tastaturen, Mäuse, Touchscreens und alphanumerische Anzeigegeräte. Die USB-HID-Tastatur verfügt beispielsweise in der Regel über einen IN-Endpunkt, der die Tastenanschläge an den Computer überträgt, und einen OUT-Endpunkt, der den Status der Tastatur-LEDs vom Computer an die Tastatur überträgt. USB-HID-Mäuse können von einfachen Geräten mit einer Taste bis hin zu zusammengesetzten Geräten mit mehreren Tasten reichen. Die meisten modernen Betriebssysteme werden mit Treibern für Standard-HID-Mausdesigns ausgeliefert.

Das Datenerfassungssystem kann zum Klassifizieren von Objekten eingerichtet sein. Insbesondere kann das Datenerfassungssystem, insbesondere die Sensorsteuereinheit, dazu eingerichtet sein, eine Eigenschaft des Objekts und/oder einen Objekttyp zu bestimmen. Die Eigenschaft gibt zum Beispiel an, ob das Objekt fehlerfrei ist oder einen (Herstellungs-) Fehler aufweist. Die Eigenschaft kann aber auch einen Preis und/oder eine Sende- und/oder Empfängeradresse des Objekts angeben. Das Objekt ist zum Beispiel ein industriell hergestelltes und/oder herzustellendes Erzeugnis, Fracht wie zum Beispiel ein Paket oder einen Brief, und/oder ein Konsumgut.

Die Sensoreinrichtung umfasst eine Erfassungseinheit, zumindest eine Sensorkommunikationsschnittstelle und eine Sensorsteuereinheit.

Die Sensorsteuereinheit kann eine CPU und/oder eine Speichereinheit aufweisen, die bevorzugt auf einer Platine angeordnet sind. Die Platine kann in einem Gehäuse der Sensoreinrichtung angeordnet sein.

Die Erfassungseinheit kann eine optische Erfassungseinheit sein. Beispielsweise umfasst die Erfassungseinheit eine Sende- und/oder Empfangsoptik, z.B. in Form einer Linse, eine Lichtquelle zum Aussenden von Messlicht und/oder einen Detektor zum Erfassen von von einem Objekt reflektierten oder remittierten Messlicht. Bei der Lichtquelle kann es sich z.B. um eine Flächenbeleuchtung oder um einen linienförmig projizierten Laserstrahl handeln.

Die Sensoreinrichtung ist dazu eingerichtet, erste Objektdaten über die Erfassungseinheit zu erfassen. Insbesondere ist die Sensoreinrichtung dazu eingerichtet, optische Objektdaten von der Erfassungseinheit zu erhalten und auszuwerten, um die ersten Objektdaten zu erfassen.

Die USB-HID-Adaptereinrichtung ist dazu eingerichtet, eine Kommunikationsverbindung zwischen der Sensoreinrichtung und einer externen Steuereinrichtung bereitzustellen. Das heißt im Gebrauch können die Sensoreinrichtung und die externen Steuereinrichtung Daten über die USB-HID-Adaptereinrichtung austauschen.

Die externe Steuereinrichtung ist zum Beispiel ein Server, bevorzugt zum Steuern eines industriellen Prozesses, ein Laptop, ein PC und/oder ein Tablet. Die externe Steuereinrichtung kann eine Mensch-Maschine-Schnittstelle, insbesondere eine Tastatur, ein Touch-Pad, eine Maus und/oder eine automatische Spracherkennung zum Empfangen einer Benutzereingabe umfassen.

Die USB-HID-Adaptereinrichtung umfasst eine erste Adapterkommunikationsschnittstelle, eine zweite Adapterkommunikationsschnittstelle und eine Adaptersteuereinheit.

Die Adaptersteuereinheit kann eine CPU und/oder eine Speichereinheit aufweisen, die bevorzugt auf einer Platine angeordnet sind. Die Platine kann in einem Gehäuse der USB-HID-Adaptereinrichtung angeordnet sein.

Die erste Adapterkommunikationsschnittstelle und die zweite Adapterkommunikationsschnittstelle können sich voneinander unterscheiden, insbesondere in ihrer Anschlussart und/oder ihrer Art der Datenübertragung. Es kann sich aber auch um Schnittstellen des gleichen Typs handeln.

Die Sensorsteuereinheit ist dazu eingerichtet, Konfigurationsinformationen zu erhalten, einen Steuerbefehl basierend auf den Konfigurationsinformationen zu erzeugen und die ersten Objektdaten und den Steuerbefehl über die zumindest eine Sensorkommunikationsschnittstelle an die USB-HID-Adaptereinrichtung zu übertragen.

Die Adaptersteuereinheit ist dazu eingerichtet, die ersten Objektdaten und den Steuerbefehl über die erste Adapterkommunikationsschnittstelle zu erhalten, die ersten Objektdaten basierend auf dem Steuerbefehl in sich von den ersten Objektdaten unterscheidende zweite Objektdaten umzuwandeln, und zumindest die zweiten Objektdaten an die externe Steuereinrichtung über die zweite Adapterkommunikationsschnittstelle zu übertragen.

Mit anderen Worten wird die Adaptereinrichtung des Systems nicht unmittelbar, sondern mittelbar durch Konfigurieren der Sensoreinrichtung konfiguriert, sodass die Objekt- oder Sensordaten an die externe Steuereinrichtung übertragen werden können, insbesondere in dem korrekten Format. Das heißt die Sensoreinrichtung stellt letztlich durch Bereitstellen des Steuerbefehls die Art und Weise ein, wie die die Adaptereinrichtung die Objektdaten übermittelt.

Diese Vorgehensweise bietet mehrere Vorteile. Zum einen kann die Sensoreinrichtung einfach und benutzerfreundlich durch das Empfangen der Konfigurationsinformationen, das heißt durch bequem vorzunehmende Softwareeinstellungen, bedarfsgerecht an die jeweilige Anwendungssituation angepasst werden. Insbesondere sind keine unterschiedlichen Hardware-Varianten der Sensoreinrichtung erforderlich. Außerdem ist dadurch, dass die Adaptereinrichtung von der Sensoreinrichtung konfigurierbar ist, nicht für jeden Sensor eines komplexen Sensor-Portfolios ein anderer Adapter von Nöten, was die Komplexität des Systems erheblich reduziert. Das erfindungsgemäße Datenerfassungssystem zeichnet sich daher unter anderem durch eine erhöhte Benutzerfreundlichkeit, Vielseitigkeit und Wirtschaftlichkeit aus.

Mögliche Weiterbildungen der Erfindung sind in den abhängigen Ansprüchen, den Zeichnung sowie der nachfolgenden Beschreibung angegeben.

Gemäß einer Ausführungsform gibt der Steuerbefehl ein Tastaturlayout der externen Steuereinrichtung an. Insbesondere ist das Tastaturlayout spezifisch für eine geographische Region. Insbesondere umfasst der Steuerbefehl einen oder mehrere der folgenden Steuerzeichen: DE (für Deutsch), US (für United States of America), UK (für United Kingdom), FR (für Französisch).

Gemäß einer Ausführungsform sind die zweiten Objektdaten von der USB-HID-Adaptereinrichtung an das Tastaturlayout der externen Steuereinrichtung angepasst. Das heißt die USB-HID-Adaptereinrichtung sendet die Sensordaten automatisch in dem korrekten Layout-Format.

Gemäß einer Ausführungsform ist die Sensorsteuereinheit dazu eingerichtet, die Konfigurationsinformationen von der externen Steuereinrichtung über die zumindest eine Sensorkommunikationsschnittstelle zu erhalten, insbesondere in Reaktion auf eine Auswahl des Tastaturlayouts durch einen Benutzer in einem Web U-ser Interface (Web-UI). Dies ist besonders benutzerfreundlich.

Das Web-Ul ist beispielsweise dadurch zugänglich, dass der Benutzer eine auf der Sensoreinrichtung angegebene IP-Adresse in einen Web-Browser eingibt. Der Benutzer kann auf das Web-Ul zum Beispiel über die externe Steuereinrichtung zugreifen. Dadurch sind keine Admin-Rechte des Benutzers erforderlich, um den Adapter zu konfigurieren.

Die Sensoreinrichtung kann dazu eingerichtet sein, das Web-Ul zur Verfügung zu stellen. Insbesondere kann die Sensoreinrichtung einen Web-Server umfassen, auf dem das Web-Ul gespeichert ist.

Gemäß einer Ausführungsform ist die Sensorsteuereinheit dazu eingerichtet, die Konfigurationsinformationen durch Scannen eines (speziellen) Strichcodes mit der Erfassungseinheit zu erhalten. Der Strichcode kann auf einem zu klassifizierenden Objekt angeordnet sein oder kann auf der nachfolgend genannten Identifikationskarte oder dergleichem angeordnet sein. Der (spezielle) Strichcode kann einen Konfigurationscode enthalten, z.B. eine spezielle üblicherweise nicht verwendete Zeichenfolge, welcher von der Sensorsteuereinheit erkannt und als Konfigurationsinformationen verarbeitet wird. Das heißt die Auswahl des Tastaturlayouts erfolgt automatisch auf Basis der in dem Strichcode enthaltenen Informationen. Dadurch ist keine (manuelle) Benutzerauswahl erforderlich.

Gemäß einer Ausführungsform ist die Sensorsteuereinheit dazu eingerichtet, die Konfigurationsinformationen durch Erfassen von benutzerspezifischen Informationen mit der Erfassungseinheit zu erhalten. Das Erfassen der benutzerspezifischen Informationen kann ein Scannen einer Identifikationskarte des Benutzers umfassen. Das heißt die Auswahl des Tastaturlayouts erfolgt automatisch basierend auf einer Erkennung des derzeitigen Benutzers, was besonders einfach und benutzerfreundlich ist.

Die vorgenannten Vorgehensweisen zum Erhalten der Konfigurationsinformationen können jeweils einzeln erfolgen oder je nach Bedarf kombiniert werden.

Gemäß einer Ausführungsform umfasst die Sensoreinrichtung eine erste Sensorkommunikationsschnittstelle und eine zweite Sensorkommunikationsschnittstelle, die sich voneinander unterscheiden, insbesondere bezüglich ihrer Anschlussart und/oder ihrer Art der Datenübertragung. Es können auch mehr als zwei Sensorkommunikationsschnittstellen unterschiedlicher Art vorgesehen sein.

Die zumindest eine Sensorkommunikationsschnittstelle, insbesondere die erste Sensorkommunikationsschnittstelle, und/oder die zweite Adapterkommunikationsschnittstelle können einen USB-Anschluss umfassen.

Zusätzlich oder alternativ umfasst die zumindest eine Sensorkommunikationsschnittstelle, insbesondere die zweite Sensorkommunikationsschnittstelle, und/oder die erste Adapterkommunikationsschnittstelle einen Ethernet-Anschluss.

Die Sensorsteuereinheit kann dazu eingerichtet sein, die Konfigurationsinformationen von der externen Steuereinrichtung über die erste Sensorkommunikationsschnittstelle zu erhalten und die ersten Objektdaten und den Steuerbefehl über die zweite Sensorkommunikationsschnittstelle an die USB-HID-Adaptereinrichtung zu übertragen. Insbesondere ist die Sensoreinrichtung bevorzugt via USB konfigurierbar und kommuniziert bevorzugt via Ethernet mit der USB-HID-Adaptereinrichtung.

Gemäß einer Ausführungsform umfasst die Sensoreinrichtung einen Feldbus zum Datenaustausch mit der externen Steuereinrichtung und/oder der USB-HID-Adaptereinrichtung.

Gemäß einer Ausführungsform ist die Sensorsteuereinheit dazu eingerichtet, die ersten Objektdaten und den Steuerbefehl in einem ersten Datenstring zu übertragen. Der erste Datenstring kann noch weitere Daten enthalten, die bevorzugt am Anfang und/oder Ende des ersten Datenstring angeordnet sind. Die Adaptersteuereinheit ist dazu eingerichtet, den Steuerbefehl aus dem ersten Datenstring herauszufiltern.

Die Adaptersteuereinheit kann dazu eingerichtet sein, den Steuerbefehl aus dem ersten Datenstring zu entfernen und die ersten Objektdaten mit den zweiten Objektdaten in dem ersten Datenstring zu ersetzen, um einen zweiten Datenstring zu erzeugen, und den zweiten Datenstring an die externe Steuereinrichtung über die zweite Adapterkommunikationsschnittstelle zu übertragen. Dies reduziert die Menge an übertragenen Daten.

Gemäß einer Ausführungsform umfassen die ersten und/oder zweiten Objektdaten Strichcodeinformationen und/oder Bildinformationen eines zu klassifizierenden Objekts. Das heißt die Sensoreinrichtung kann als ein Barcodeleser zum Erfassen eines bevorzugt auf einem Objekt angeordneten Strich- oder Barcodes sein. Allgemein kann die Sensoreinrichtung zur Erkennung von maschinenlesbaren Codes ausgebildet sein, z.B. von QR-Codes, Barcodes, Post-Codes und dergleichen. Der erkannte maschinenlesbare Code kann insbesondere als Teil der ersten Objektdaten über die Sensorkommunikationsschnittstelle ausgegeben bzw. übertragen werden. Die Sensoreinrichtung kann eine Kameraeinrichtung zum Erfassen von Bildinformationen eines Objekts umfassen.

Die Erfindung betrifft des Weiteren eine USB-HID-Adaptereinrichtung für ein Datenerfassungssystem, insbesondere gemäß zumindest einer der vorherigen Ausführungsformen. Die USB-HID-Adaptereinrichtung umfasst eine erste Adapterkommunikationsschnittstelle, eine zweite Adapterkommunikationsschnittstelle und eine Adaptersteuereinheit. Die USB-HID-Adaptereinrichtung ist dazu eingerichtet, eine Kommunikationsverbindung zwischen einer Sensoreinrichtung zum Erfassen erster Objektdaten und einer externen Steuereinrichtung bereitzustellen. Die Adaptersteuereinheit ist dazu eingerichtet, die ersten Objektdaten und einen Steuerbefehl über die erste Adapterkommunikationsschnittstelle von der Sensoreinrichtung zu erhalten, die ersten Objektdaten basierend auf dem Steuerbefehl in modifizierte zweite Objektdaten umzuwandeln, und zumindest die zweiten Objektdaten an die externe Steuereinrichtung über die zweite Adapterkommunikationsschnittstelle zu übertragen.

Die erfindungsgemäße USB-HID-Adaptereinrichtung kann durch das Erhalten des Steuerbefehls automatisch an den jeweiligen Anwendungsfall angepasst werden und ermöglich so einen reibungslosen und korrekten Datenaustausch zwischen der Sensorvorrichtung und der externen Steuereinrichtung.

Die Erfindung betrifft ferner eine Sensoreinrichtung für ein Datenerfassungssystem, insbesondere gemäß zumindest einem der vorherigen Ausführungsformen. Die Sensoreinrichtung umfasst eine bevorzugt optische Erfassungseinheit, zumindest eine Sensorkommunikationsschnittstelle und eine Sensorsteuereinheit. Die Sensoreinrichtung ist dazu eingerichtet, erste Objektdaten über die Erfassungseinheit zu erfassen. Die Sensorsteuereinheit ist dazu eingerichtet, Konfigurationsinformationen zu erhalten, einen Steuerbefehl basierend auf den Konfigurationsinformationen zu erzeugen und die ersten Objektdaten und den Steuerbefehl über die zumindest eine Sensorkommunikationsschnittstelle an eine USB-HID-Adaptereinrichtung zu übertragen, die dazu eingerichtet ist, eine Kommunikationsverbindung zwischen der Sensoreinrichtung der externen Steuereinrichtung bereitzustellen.

Die erfindungsgemäße Sensoreinrichtung kann durch Erhalten der Konfigurationsinformationen besonders einfach und benutzerfreundlich konfiguriert werden. Außerdem ist sie in der Lage, die USB-HID-Adaptereinrichtung durch Übertragen des Steuerbefehls automatisch auf den jeweiligen Anwendungsfall einzustellen.

Die Erfindung betrifft auch ein Verfahren zum Erfassen von Objektdaten mit einem Datenerfassungssystem, insbesondere gemäß zumindest einem der vorherigen Ausführungsformen. Das Datenerfassungssystems umfasst zumindest eine Sensoreinrichtung umfassend eine bevorzugt optische Erfassungseinheit, zumindest eine Sensorkommunikationsschnittstelle und eine Sensorsteuereinheit, wobei die Sensoreinrichtung dazu eingerichtet ist, erste Objektdaten über die Erfassungseinheit zu erfassen. Das Datenerfassungssystems umfasst ferner zumindest eine Universal Serial Bus-Human Interface Device (USB-HID)-Adaptereinrichtung, die dazu eingerichtet ist, eine Kommunikationsverbindung zwischen der Sensoreinrichtung und einer externen Steuereinrichtung bereitzustellen. Die USB-HID-Adaptereinrichtung umfasst eine erste Adapterkommunikationsschnittstelle, eine zweite Adapterkommunikationsschnittstelle und eine Adaptersteuereinheit. Das Verfahren umfasst das Erhalten von Konfigurationsinformationen durch die Sensorsteuereinheit, das Erzeugen eines Steuerbefehls basierend auf den Konfigurationsinformationen durch die Sensorsteuereinheit, das Übertragen, durch die Sensorsteuereinheit, der ersten Objektdaten und des Steuerbefehls über die zumindest eine Sensorkommunikationsschnittstelle an die USB-HID-Adaptereinrichtung, das Erhalten, durch die Adaptersteuereinheit, der ersten Objektdaten und des Steuerbefehls über die erste Adapterkommunikationsschnittstelle, das Umwandeln, durch die Adaptersteuereinheit, der ersten Objektdaten in modifizierte zweite Objektdaten basierend auf dem Steuerbefehl, und das Übertragen, durch die Adaptersteuereinheit, zumindest der zweiten Objektdaten an die externe Steuereinrichtung über die zweite Adapterkommunikationsschnittstelle.

Das erfindungsgemäße Verfahren zum Erfassen von Objektdaten ist besonders benutzerfreundlich und effizient.

Die in Bezug auf die Ausführungsformen des Datenerfassungssystems beschriebenen Merkmale und Vorteile sind auf die USB-HID-Adaptereinrichtung, die Sensoreinrichtung und das Verfahren zum Erfassen von Objektdaten übertragbar.

Die Erfindung wird im Folgenden beispielhaft unter Bezugnahme auf die Zeichnung beschrieben. Es zeigen:
- Fig. 1: ein vereinfachtes Blockschaltbild eines Datenerfassungssystems, und
- Fig. 2 und 3: eine vereinfachte Darstellung eines Verfahrens zum Erfassen von Objektdaten.

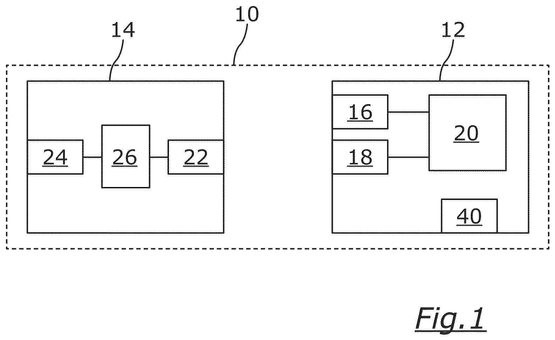

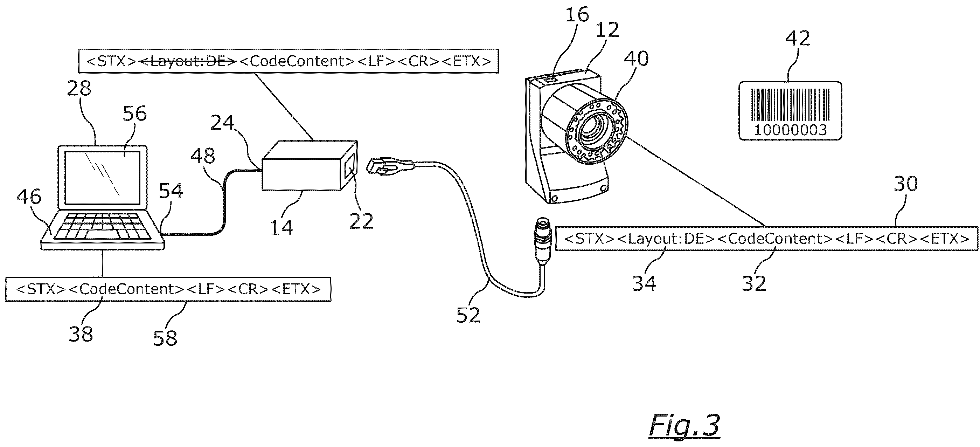

Die Fig. 1 zeigt ein Blockschaltbild eines Datenerfassungssystems 10, welches eine Sensoreinrichtung 12 und eine USB-HID-Adaptereinrichtung 14 umfasst. Die Sensoreinrichtung 12 und die USB-HID-Adaptereinrichtung 14 sind baulich getrennt voneinander angeordnet, das heißt sie weisen jeweils ein separates Gehäuse auf (siehe Fig. 3). Es können genau eine oder zwei oder mehr Sensoreinrichtungen 12 vorgesehen sein. Analoges gilt für die USB-HID-Adaptereinrichtung 14. Das Datenerfassungssystem 10 ist zum Klassifizieren von Objekten eingerichtet.

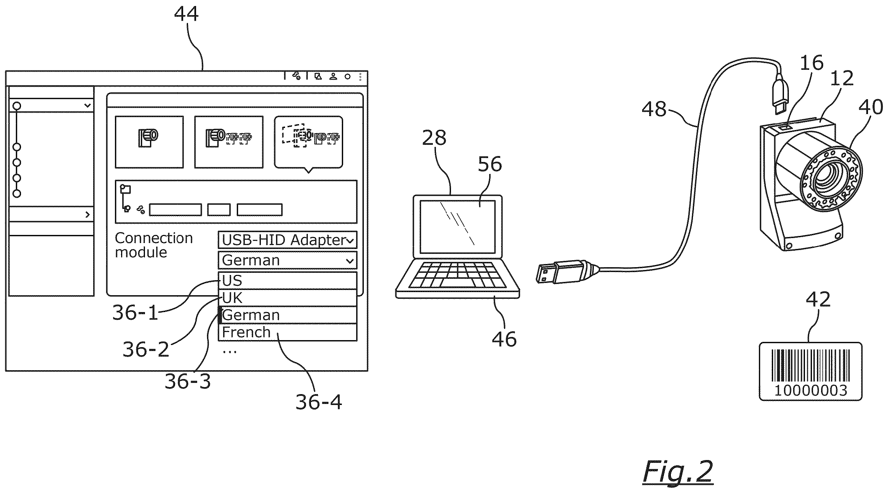

Die Sensoreinrichtung 12 weist eine optische Erfassungseinheit 40 zum Erfassen von Objektdaten 32, einen USB-Anschluss bzw. eine erste Sensorkommunikationsschnittstelle 16 zum Austausch von Daten mit einer externen Steuereinrichtung 28 (siehe Fig. 2 und 3), einen Ethernet-Anschluss bzw. eine zweite Sensorkommunikationsschnittstelle 18 zum Austausch von Daten mit der USB-HID-Adaptereinrichtung 14 und eine Sensorsteuereinheit 20 zum Steuern des Betriebs der Sensoreinrichtung 12 auf. Es kann aber auch nur ein einziger Anschluss zum Kommunizieren mit der externen Steuereinrichtung 28 und der USB-HID-Adaptereinrichtung 14 vorgesehen sein. Je nach Bedarf sind mehr als zwei Kommunikationsschnittstellen vorgesehen.

Die USB-HID-Adaptereinrichtung 14 umfasst einen Ethernet-Anschluss bzw. eine erste Adapterkommunikationsschnittstelle 22 zum Austausch von Daten mit der Sensoreinrichtung 12, einen USB-Anschluss bzw. eine zweite Adapterkommunikationsschnittstelle 24 zum Austausch von Daten mit der externen Steuereinrichtung 28 und eine Adaptersteuereinheit 26 zum Steuern des Betriebs der USB-HID-Adaptereinrichtung 14. Es können je nach Bedarf auch drei oder mehr Kommunikationsschnittstellen vorgesehen sein.

Wie in Fig. 2 gezeigt ist, wird zum Konfigurieren der Sensoreinrichtung 12 die externe Steuereinrichtung 28, die hier beispielhaft als ein Laptop mit einem Bildschirm 56 und einer Tastatur 46 dargestellt ist, zunächst über ein USB-Kabel 48 mit der Sensoreinrichtung 12 verbunden. Es kann beispielsweise aber auch eine drahtlose Kommunikationsverbindung oder eine Ethernet-Verbindung hergestellt werden. Auch kann es sich anstatt eines Laptops um einen Desktop-PC oder einen Server oder dergleichen handeln (nicht gezeigt).

Ferner ist die Sensoreinrichtung 12 hier beispielhaft als ein fortschrittlicher Sensor mit einer optischen Erfassungseinheit 40 beschrieben, welche über eine Lichtquelle, eine Linsenanordnung und einen Detektor zum Erfassen von Objektdaten verfügt. Die Sensoreinrichtung 12 ist beispielsweise dazu eingerichtet, einen Strich- oder Barcode 42 zu detektieren, das heißt sie kann als ein Barcodeleser ausgesteltet sein. Zusätzlich oder alternativ kann die Sensoreinrichtung 12 dazu ausgelegt sein, Fehler oder Abweichungen in Erzeugnissen zu erkennen, bevorzugt automatisch, beispielsweise Kl-basiert.

Nach der Herstellung der USB-Verbindung 48 zwischen dem Laptop und der Sensoreinrichtung 12 greift ein Benutzer über den Laptop auf ein Web-Ul 44 zu und wählt dort das korrekte Layout 36 der Tastatur 46 des Laptops aus mehreren optionalen Tastaturlayouts 36-1 bis 36-4 aus.

Bevorzugt wird das Web-Ul 44 automatisch angezeigt, wenn die USB-Verbindung 48 hergestellt wird. Das heißt das Web-Ul 44 kann in der Sensoreinrichtung 12 gespeichert sein und bei Bedarf durch diese bereitgestellt werden.

In Reaktion auf die Benutzerauswahl werden entsprechende Konfigurationsinformationen von dem Laptop an die Sensoreinrichtung 12 übermittelt, die die Konfigurationsinformationen speichert. In dem gezeigten Beispiel geben die Konfigurationsinformationen an, dass die Tastatur 46 ein deutsches Tastaturlayout 36 ("German") aufweist. Damit ist die Konfiguration der Sensoreinrichtung 12 abgeschlossen.

Zusätzlich oder alternativ zu der beschriebenen Vorgehensweise kann die Sensoreinrichtung 12 durch Scannen des Barcodes 42 konfiguriert werden. Dabei extrahiert die Sensoreinrichtung 12 automatisch die Konfigurationsinformationen aus den (Bild-) Informationen, die in dem Barcode 42 enthalten sind.

Eine weitere Ausführungsform sieht vor, dass die Sensoreinrichtung 12 bequem durch Scannen einer Identifikationskarte (nicht gezeigt) eines Benutzers konfigurierbar ist. Dabei erfasst die Sensoreinrichtung 12 Bilddaten der Identifikationskarte, beispielsweise einen Strichcode auf der Karte, und extrahiert die Konfigurationsinformationen aus den Informationen, die in den Bildinformationen enthalten sind.

Die genannten Methoden zum Erhalten der Konfigurationsinformationen sind besonders einfach und benutzerfreundlich und können bedarfsgerecht kombiniert werden oder jeweils einzeln ausgeführt werden.

Wie in Fig. 3 beispielhaft dargestellt ist, wird zum Erfassen von Objektdaten die Sensoreinrichtung 12 über die USB-HID-Adaptereinrichtung 14 zunächst mit der externen Steuereinrichtung 28 verbunden. Dabei wird der Ethernet-Anschluss 18 der Sensoreinrichtung 12 mit dem Ethernet-Anschluss 22 der USB-HID-Adaptereinrichtung 14 über ein Ethernet-Kabel 52 verbunden, und der USB-Anschluss 24 der USB-HID-Adaptereinrichtung 14 wird mit einem USB-Anschluss 54 der externen Steuereinrichtung 28 über ein USB-Kabel 48 verbunden.

Danach erfasst die Sensoreinrichtung 12 erste Objektdaten 32 mittels der optischen Erfassungseinheit 40. In dem gezeigten Beispiel scannt die Sensoreinrichtung 12 einen Barcode 42, welcher auf einem zu klassifizierenden Objekt (nicht gezeigt) angeordnet ist. Das heißt die ersten Objektdaten 32 sind hier Strichcodeinformationen, die beispielsweise Eigenschaften des Objekts angeben.

Außerdem erzeugt die Sensorsteuereinheit 20 der Sensoreinrichtung 12 einen Steuerbefehl 34 für die USB-HID-Adaptereinrichtung 14 aus den zuvor erhaltenen Konfigurationsinformationen. Folglich gibt der Steuerbefehl 34 in dem gezeigten Beispiel an, dass das Tastaturlayout 36 der externen Steuereinrichtung 28 Deutsch ist.

Anschließend erzeugt die Sensorsteuereinheit 20 einen ersten Datenstring 30, welcher unter anderem die ersten Objektdaten 32 ("<CodeContent>") und den Steuerbefehl 34 ("<Layout:DE>") enthält, und überträgt den ersten Datenstring 30 über die Ethernet-Verbindung 52 an die Adaptersteuereinheit 26 der USB-HID-Adaptereinrichtung 14.

Die Adaptersteuereinheit 26 extrahiert daraufhin den Steuerbefehl 34 und wandelt basierend auf dem Steuerbefehl 34 die ersten Objektdaten 32 in zweite Objektdaten 38 um. Die ersten Objektdaten 32 unterscheiden sich von den zweiten Objektdaten 38 dahingehend, dass die zweiten Objektdaten 38 in dem korrekten bzw. zuvor ausgewählten Tastaturlayout 36 vorliegen.

Anschließend erzeugt die Adaptersteuereinheit 26 einen zweiten Datenstring 58, indem sie die ersten Objektdaten 32 durch die zweiten Objektdaten 38 in dem ersten Datenstring 30 ersetzt und den Steuerbefehl 34 aus dem ersten Datenstring 30 streicht bzw. entfernt.

Der zweite Datenstring 58 wird dann an die externe Steuereinrichtung 28 über die USB-Verbindung 48 übertragen.

Der durch die Sensoreinrichtung 12 gescannte Barcode 42 wird folglich automatisch auf korrekte Art und Weise als Buchstaben- und/oder Zahlenfolge auf dem Bildschirm 56 der externen Steuereinrichtung 28 angezeigt.

Die in Bezug auf die Fig. 2 und 3 beschriebene Vorgehensweise zum Erfassen von Objektdaten ist besonders benutzerfreundlich und effizient. Das dabei verwendete Datenerfassungssystem 10 zeichnet sich durch eine verringerte Komplexität und einer erhöhte Wirtschaftlichkeit aus.

### Bezugszeichenliste

- 10: Datenerfassungssystem
- 12: Sensoreinrichtung
- 14: USB-HID-Adaptereinrichtung
- 16: erste Sensorkommunikationsschnittstelle
- 18: zweite Sensorkommunikationsschnittstelle
- 20: Sensorsteuereinheit
- 22: erste Adapterkommunikationsschnittstelle
- 24: zweite Adapterkommunikationsschnittstelle
- 26: Adaptersteuereinheit
- 28: externe Steuereinrichtung
- 30: erster Datenstring
- 32: erste Objektdaten
- 34: Steuerbefehl
- 36: Tastaturlayout
- 38: zweite Objektdaten
- 40: Erfassungseinheit
- 42: Strichcode
- 44: Web-Ul
- 46: Tastatur
- 48: USB-Kabel
- 52: Ethernet-Kabel
- 54: USB-Anschluss der externen Steuereinrichtung
- 56: Bildschirm der externen Steuereinrichtung
- 58: zweiter Datenstring

## Patentansprüche

1. Datenerfassungssystem (10), insbesondere zum Klassifizieren von Objekten, das Datenerfassungssystem (10) umfassend:
zumindest eine Sensoreinrichtung (12) umfassend eine, bevorzugt optische, Erfassungseinheit (40), zumindest eine Sensorkommunikationsschnittstelle (16, 18) und eine Sensorsteuereinheit (20), wobei die Sensoreinrichtung (12) dazu eingerichtet ist, erste Objektdaten (32) über die Erfassungseinheit (40) zu erfassen, und
zumindest eine Universal Serial Bus-Human Interface Device (USB-HID)-Adaptereinrichtung (14), die dazu eingerichtet ist, eine Kommunikationsverbindung zwischen der Sensoreinrichtung (12) und einer externen Steuereinrichtung (28) bereitzustellen, wobei die USB-HID-Adaptereinrichtung (14) eine erste Adapterkommunikationsschnittstelle (22), eine zweite Adapterkommunikationsschnittstelle (24) und eine Adaptersteuereinheit (26) umfasst,
wobei die Sensorsteuereinheit (20) dazu eingerichtet ist, Konfigurationsinformationen zu erhalten, einen Steuerbefehl (34) basierend auf den Konfigurationsinformationen zu erzeugen und die ersten Objektdaten (32) und den Steuerbefehl (34) über die zumindest eine Sensorkommunikationsschnittstelle (16, 18) an die USB-HID-Adaptereinrichtung (14) zu übertragen, und
wobei die Adaptersteuereinheit (26) dazu eingerichtet ist, die ersten Objektdaten (32) und den Steuerbefehl (34) über die erste Adapterkommunikationsschnittstelle (22) zu erhalten, die ersten Objektdaten (32) basierend auf dem Steuerbefehl (34) in sich von den ersten Objektdaten unterscheidende zweite Objektdaten (38) umzuwandeln, und zumindest die zweiten Objektdaten (38) an die externe Steuereinrichtung (28) über die zweite Adapterkommunikationsschnittstelle (24) zu übertragen.

2. Datenerfassungssystem (10) nach Anspruch 1,
wobei der Steuerbefehl (34) ein Tastaturlayout (36) der externen Steuereinrichtung (28) angibt, insbesondere wobei das Tastaturlayout (36) spezifisch für eine geographische Region ist.

3. Datenerfassungssystem (10) nach Anspruch 2,
wobei die zweiten Objektdaten (38) von der USB-HID-Adaptereinrichtung (14) an das Tastaturlayout (36) der externen Steuereinrichtung (28) angepasst sind.

4. Datenerfassungssystem (10) nach zumindest einem der vorherigen Ansprüche,
wobei die Sensorsteuereinheit (20) dazu eingerichtet ist, die Konfigurationsinformationen von der externen Steuereinrichtung (28) über die zumindest eine Sensorkommunikationsschnittstelle (16, 18) zu erhalten, insbesondere in Reaktion auf eine Auswahl des Tastaturlayouts (36) durch einen Benutzer in einem Web User Interface (44).

5. Datenerfassungssystem (10) nach zumindest einem der vorherigen Ansprüche,
wobei die Sensorsteuereinheit (20) dazu eingerichtet ist, die Konfigurationsinformationen durch Scannen eines Strichcodes (42) mit der Erfassungseinheit (40) zu erhalten, insbesondere wobei der Strichcode (42) auf einem zu klassifizierenden Objekt angeordnet ist.

6. Datenerfassungssystem (10) nach zumindest einem der vorherigen Ansprüche,
wobei die Sensorsteuereinheit (20) dazu eingerichtet ist, die Konfigurationsinformationen durch Erfassen von benutzerspezifischen Informationen mit der Erfassungseinheit (40) zu erhalten, insbesondere wobei das Erfassen der benutzerspezifischen Informationen ein Scannen einer Identifikationskarte des Benutzers umfasst.

7. Datenerfassungssystem (10) nach zumindest einem der vorherigen Ansprüche,
wobei die Sensoreinrichtung (12) eine erste Sensorkommunikationsschnittstelle (16) und eine zweite Sensorkommunikationsschnittstelle (18) umfasst, die sich voneinander unterscheiden, insbesondere bezüglich ihrer Anschlussart und/oder ihrer Art der Datenübertragung.

8. Datenerfassungssystem (10) nach zumindest einem der vorherigen Ansprüche,
wobei die zumindest eine Sensorkommunikationsschnittstelle (16, 18), insbesondere die erste Sensorkommunikationsschnittstelle (16), und/oder die zweite Adapterkommunikationsschnittstelle (24) einen USB-Anschluss umfasst.

9. Datenerfassungssystem (10) nach zumindest einem der vorherigen Ansprüche,
wobei die zumindest eine Sensorkommunikationsschnittstelle (16, 18), insbesondere die zweite Sensorkommunikationsschnittstelle (18), und/oder die erste Adapterkommunikationsschnittstelle (22) einen Ethernet-Anschluss umfasst.

10. Datenerfassungssystem (10) nach zumindest einem der vorherigen Ansprüche,
wobei die Sensorsteuereinheit (20) dazu eingerichtet ist, die ersten Objektdaten (32) und den Steuerbefehl (34) in einem ersten Datenstring (30) zu übertragen,
wobei die Adaptersteuereinheit (26) dazu eingerichtet ist, den Steuerbefehl (34) aus dem ersten Datenstring (30) herauszufiltern.

11. Datenerfassungssystem (10) nach Anspruch 10,
wobei die Adaptersteuereinheit (26) dazu eingerichtet ist, den Steuerbefehl (34) aus dem ersten Datenstring (30) zu entfernen und die ersten Objektdaten (32) mit den zweiten Objektdaten (38) in dem ersten Datenstring (30) zu ersetzen, um einen zweiten Datenstring (58) zu erzeugen, und den zweiten Datenstring (58) an die externe Steuereinrichtung (28) über die zweite Adapterkommunikationsschnittstelle (24) zu übertragen.

12. Datenerfassungssystem (10) nach zumindest einem der vorherigen Ansprüche,
wobei die ersten und/oder zweiten Objektdaten (32, 38) Strichcodeinformationen und/oder Bildinformationen eines zu klassifizierenden Objekts umfassen.

13. USB-HID-Adaptereinrichtung (14) für ein Datenerfassungssystem (10), insbesondere gemäß zumindest einem der vorherigen Ansprüche, die USB-HID-Adaptereinrichtung (14) umfassend eine erste Adapterkommunikationsschnittstelle (22), eine zweite Adapterkommunikationsschnittstelle (24) und eine Adaptersteuereinheit (26),
wobei die USB-HID-Adaptereinrichtung (14) dazu eingerichtet ist, eine Kommunikationsverbindung zwischen einer Sensoreinrichtung (12) zum Erfassen erster Objektdaten (32) und einer externen Steuereinrichtung (28) bereitzustellen,
wobei die Adaptersteuereinheit (26) dazu eingerichtet ist, die ersten Objektdaten (32) und einen Steuerbefehl (34) über die erste Adapterkommunikationsschnittstelle (22) von der Sensoreinrichtung (12) zu erhalten, die ersten Objektdaten (32) basierend auf dem Steuerbefehl (34) in modifizierte zweite Objektdaten (38) umzuwandeln, und zumindest die zweiten Objektdaten (38) an die externe Steuereinrichtung (28) über die zweite Adapterkommunikationsschnittstelle (24) zu übertragen.

14. Sensoreinrichtung (12) für ein Datenerfassungssystem (10), insbesondere gemäß zumindest einem der Ansprüche 1 bis 13, die Sensoreinrichtung (12) umfassend eine bevorzugt optische Erfassungseinheit (40), zumindest eine Sensorkommunikationsschnittstelle (16, 18) und eine Sensorsteuereinheit (20),
wobei die Sensoreinrichtung (12) dazu eingerichtet ist, erste Objektdaten (32) über die Erfassungseinheit (40) zu erfassen,
wobei die Sensorsteuereinheit (20) dazu eingerichtet ist, Konfigurationsinformationen zu erhalten, einen Steuerbefehl (34) basierend auf den Konfigurationsinformationen zu erzeugen und die ersten Objektdaten (32) und den Steuerbefehl (34) über die zumindest eine Sensorkommunikationsschnittstelle (16, 18) an eine USB-HID-Adaptereinrichtung (14) zu übertragen, die dazu eingerichtet ist, eine Kommunikationsverbindung zwischen der Sensoreinrichtung (12) der externen Steuereinrichtung (28) bereitzustellen.

15. Verfahren zum Erfassen von Objektdaten mit einem Datenerfassungssystem (10), insbesondere gemäß zumindest einem der Ansprüche 1 bis 13,
wobei das Datenerfassungssystems (10) umfasst:
zumindest eine Sensoreinrichtung (12) umfassend eine bevorzugt optische Erfassungseinheit (40), zumindest eine Sensorkommunikationsschnittstelle (16, 18) und eine Sensorsteuereinheit (20), wobei die Sensoreinrichtung (12) dazu eingerichtet ist, erste Objektdaten (32) über die Erfassungseinheit (40) zu erfassen, und
zumindest eine Universal Serial Bus-Human Interface Device (USB-HID)-Adaptereinrichtung (14), die dazu eingerichtet ist, eine Kommunikationsverbindung zwischen der Sensoreinrichtung (12) und einer externen Steuereinrichtung (28) bereitzustellen, wobei die USB-HID-Adaptereinrichtung (14) eine erste Adapterkommunikationsschnittstelle (22), eine zweite Adapterkommunikationsschnittstelle (24) und eine Adaptersteuereinheit (26) umfasst,
wobei das Verfahren umfasst:
Erhalten von Konfigurationsinformationen durch die Sensorsteuereinheit (20),
Erzeugen eines Steuerbefehls (34) basierend auf den Konfigurationsinformationen durch die Sensorsteuereinheit (20),
Übertragen, durch die Sensorsteuereinheit (20), der ersten Objektdaten (32) und des Steuerbefehls (34) über die zumindest eine Sensorkommunikationsschnittstelle (16, 18) an die USB-HID-Adaptereinrichtung (14),
Erhalten, durch die Adaptersteuereinheit (26), der ersten Objektdaten (32) und des Steuerbefehls (34) über die erste Adapterkommunikationsschnittstelle (22),
Umwandeln, durch die Adaptersteuereinheit (26), der ersten Objektdaten (32) in modifizierte zweite Objektdaten (38) basierend auf dem Steuerbefehl (34), und
Übertragen, durch die Adaptersteuereinheit (26), zumindest der zweiten Objektdaten (38) an die externe Steuereinrichtung (28) über die zweite Adapterkommunikationsschnittstelle (24).
